(19) Europäisches Patentamt
European Patent Office
Office européen des brevets

(11) **EP 1 569 240 A1**

(12) **EUROPEAN PATENT APPLICATION**

(43) Date of publication:
**31.08.2005 Bulletin 2005/35**

(51) Int Cl.[7]: **G11B 27/28**, G06F 17/30

(21) Application number: **04257813.8**

(22) Date of filing: **15.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **28.02.2004 KR 2004013778**

(71) Applicant: **SAMSUNG ELECTRONICS CO., LTD. Gyeonggi-do (KR)**

(72) Inventors:
• **Doosun, Hwang**
  **Eunpyeong-gu Seoul (KR)**
• **Sangkyun, K., 103-401 Geumhwa Maeul Daewoo Yongin-si Geyonggi-do (KR)**
• **Jiyeun, Kim**
  **Songpa-gu Seoul (KR)**

(74) Representative: **Greene, Simon Kenneth Elkington and Fife LLP,
Prospect House,
8 Pembroke Road
Sevenoaks,
Kent TN13 1XR (GB)**

(54) **Apparatus and method for determining anchor shots**

(57) Provided are a method of determining anchor shots and an apparatus therefor capable of detecting anchor shots on various formats of videos, detecting shots rapidly, and detecting anchor shots appearing at least once. The method of determining anchor shots extracts basic shots from video data, and selects anchor model candidate shots from the basic shots according to a predetermined first standard. In addition, the method determines anchor model shots from the anchor model candidate shots according to a predetermined second standard, and determines anchor shots by comparing the determined anchor model shots and the basic shots. The apparatus for determining anchor shots includes a shot boundary determining unit, a skin color extracting unit, an anchor face determining unit, a background color area determining unit, an anchor model candidate shot determining unit, an object color area determining unit, a shot grouping unit, an anchor model creating unit, a block determining unit, and an anchor shot determining unit.

FIG. 1

**Description**

The present invention relates to videos and, more particularly, to a method of automatically detecting anchors used for indexing, summarizing, and browsing videos of programs.

Various kinds of information can be obtained through mediums, such as television, Internet, and radio. In particular, a news program has a very important role as an information source in modern society. Today, however, watching a news program at a fixed time is sometimes difficult. On the other hand, since a vast amount of information can be obtained through the news or other programs, many desire to watch a previously-wired news program. A broadcasting station provides videos of the news and other programs and sells the videos.

Customers can view the offered data through playback devices. If customers are allowed to view only desired portions of the program rather than the entire program, indexing and browsing functions should be provided together with the program.

In general, the news program conveys various items in a sequential manner. In other words, it is common that an anchor preliminarily announces news items and reporters convey the details of the news items while showing reference materials. Therefore, the news items can be generally distinguished from one another on the basis of the anchor.

Assuming that a snapshot of a screen on which the anchor appears in a news video is an anchor shot, the anchor shot can be used for efficiently indexing and browsing news videos. In order to obtain the anchor shot, there have been mainly used three conventional methods: a template-based method, a clustering-based method, and a multimodal-based method.

The template-based method is disclosed in detail in two papers entitled "Video indexing through integration of syntactic and semantic features" by M. Tekalp in 1996, and "Automatic anchor person detection from an MPEG coded TV program" by Y. Nakajima. This method has a disadvantage in that the method uses fixed templates and thus it is difficult to detect anchors in a variety of news programs.

The template-based method disclosed in the paper entitled "Template-based detection of anchor person shot in news programs" by A. Hanjalic in 1998 can be applied to various formats of news programs because templates are determined within news videos. However, the template-based method has a disadvantage in that information on the temporal positions of a first anchor shot used as a template should be generally known.

An example of the clustering-based method is disclosed in the paper entitled "A Graph-Theoretical Clustering based Anchor person Shot Detection for News Video Indexing" by Xinbo Gao in 2003. The method detects anchor shots by using a graph theory. However, the method has disadvantages in that only anchor shots appearing at least twice can be detected in news programs, and shots appearing in time intervals can be incorrectly detected. The conventional clustering-based methods disclosed in KR 2002-0075081, US 20020146168, and JP 2003-32583 cannot detect an anchor shot in news videos which are not suitable for a model of the anchor shot since the model of the anchor shot is determined in advance. In general, the clustering-based method has the disadvantage of a long detection time.

The multimodal-based method disclosed in KR 2002-0016318 extracts multimodal characteristics from news videos which includes closed caption signals, and automatically detects main sections of the news videos on the basis of the extracted characteristics to summarize the news.

In short, the disadvantages of the prior art are as follows.

Firstly, an incorrect detection may occur in shots, such as dialogue scenes other than typical news programs, because only information on colors of areas around an anchor's head is used (a problem of incorrectly detecting shots).

Secondly, when a format of a news program is changed, anchor shots cannot be detected because of the usage of a fixed template (a problem of being unable to adapt to various formats of news programs).

Thirdly, anchor shots appearing only once cannot be detected throughout the entire news program (a problem of not detecting shots).

Fourth, a detection speed becomes low because clustering is performed by evaluating the amount of similarity between the entire key frames (a problem of a low speed).

According to an aspect of the present invention, there is provided a method of determining anchor shots comprising: extracting a plurality of basic shots; selecting a plurality of anchor model candidate shots; determining at least one anchor model shot; and determining at least one anchor shot.

In the extracting step, a plurality of basic shots is extracted from video data according to a predetermined standard. In the selecting step, a plurality of anchor model candidate shots is selected from the plurality of basic shots by applying a first standard to the extracted plurality of basic shots. In the determining step of the anchor model shot, at least one anchor model shot is determined by applying a second standard to the plurality of anchor model candidate shots. The determining step of the anchor shot, at least one anchor shot is determined by comparing the similarity of at least one anchor model shot and the plurality of basic shots.

According to another aspect of the present invention, there is provided an apparatus for determining anchor shots comprising: a shot boundary determining unit; a skin color extracting unit; an anchor face determining unit; a background color area determining unit;

an anchor model candidate shot determining unit; an object color area determining unit; a shot grouping unit; an anchor model creating unit; a block determining unit; and an anchor shot determining unit.

The present invention aims to provide a method of determining anchor shots capable of detecting anchor shots on various formats of videos, detecting shots rapidly, and detecting anchor shots that appear at least once in a program.

The present invention also provides an apparatus for determining anchor shots capable of detecting anchor shots on various formats of videos, detecting shots rapidly, and detecting anchor shots that appears at least once in a program.

The above and other features and advantages of the present invention will become more apparent by describing in detail exemplary embodiments thereof with reference to the attached drawings in which:

> FIG. 1 is a flowchart showing a method of determining anchor shots according to an embodiment of the present invention;
> FIG. 2 is a diagram showing a cluster of anchor model candidate shots used in a method of determining anchor shots according to an embodiment of the present invention;
> FIG. 3 is a diagram showing anchor model shots used in a method of determining anchor shots according to an embodiment of the present invention;
> FIG. 4 is a diagram showing a method of dividing anchor model shots used in a method of determining anchor shots into blocks according to an embodiment of the present invention; and
> FIG. 5 is a block diagram showing an apparatus for determining anchor shots according to another embodiment of the present invention.

Exemplary embodiments according to the present invention will now be described in detail with reference to the accompanying drawings. Like reference numerals in the drawings denote like elements.

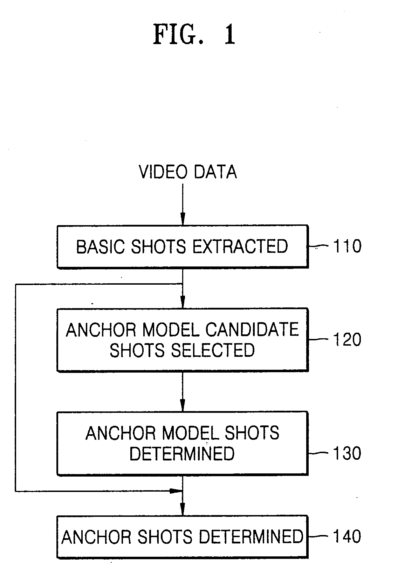

FIG. 1 is a flowchart showing a method of determining anchor shots according to an embodiment of the present invention.

The method of determining anchor shots comprises a basic shot extracting step 110, an anchor model candidate shot selecting step 120, an anchor model shot determining step 130, and an anchor shot determining step 140.

The basic shot extracting step 110 extracts a plurality of basic shots from a video of news or other programs on the basis of a moment when an image displayed for a predetermined time is changed to a different image. Therefore, in case of news videos, the plurality of basic shots include any data corresponding to the moment when an image is changed. Examples of such data include anchors, reporters, locations where events occurred, captions for summarizing events, and graphs.

The anchor model candidate shot selecting step 120 selects a plurality of anchor model candidate shots from the plurality of basic shots by applying a first standard to the plurality of basic shots. The first standard is the amount of similarity of anchor face detection information, anchor face restriction condition, shot length, and background color information between the plurality of basic shots.

The anchor model shot determining step 130 determines at least one anchor model shot by applying a second standard to the plurality of anchor model candidate shots. The second standard is the position and color information of the face and upper-half body of an anchor. The number of the anchor model shots is determined according to the gender of an anchor, and the position and color information of the face and upper-half body of the anchor.

The anchor shot determining step 140 introduces a rectangle including the face and upper-half body of the anchor appearing on the anchor model shots and the basic shots, groups together pixels constituting the rectangle in order to divide the rectangle into a plurality of blocks, and determines shots having a close similarity regarding color information between the blocks constituting the compared shots to be anchor shots.

A method of detecting anchors will be now described in detail.

Firstly, the anchor model candidate shot selecting step is set forth.

The anchor model candidate shots are selected from all the basic shots in the news divided into shots by using shot length, anchor face restriction condition, anchor face detection information, and background color information.

Information on the shot length is obtained under the assumption that at least one shot lasts for at least 10 seconds among shots on which the anchor appears in the news videos.

Since the anchor model candidate shots are images on which the faces of the anchors appear, it is possible to easily detect the faces of the anchors when skin colors are used as anchor face detection information. Colors having values between predetermined threshold values are determined to be the skin colors. The predetermined threshold values are set by a designer of the system.

If noise is removed from the data on the detected anchor face and an anchor face restriction condition is applied, more accurate data on the anchor face can be detected from the data on the detected anchor face, which is roughly obtained. The anchor face restriction condition is determined according to the size and the position of a face rectangle, varying degree, and skin color density.

The term "face rectangle" means a rectangle which includes a face by which a personal appearance is determined to be an anchor. If the entire screen on which an anchor appears is set as a basic shot, determining an anchor shot from shots including the anchor can be complicated. Therefore, it is preferable that the rectangle is defined as a minimum area which includes the face of an anchor, and the anchor shot is determined on the basis of data collected from the rectangle.

The position of a face rectangle means the position of an anchor on a screen. In general, the anchor is located in the center portion, the left side, or the right side of a screen.

The varying degree means a difference in an angle between the shots of the anchor's face that appears on a screen according to the angle of a camera, which records the anchor. Anchor shots having a small difference in an angle are considered to be the same shots.

The skin color density is also an important standard in the determination of the anchor face restriction condition. If shots having too low a skin color density are determined to be anchor shots, the screen may lack clarity. Therefore, the skin color density is a standard for removing the unclear shots.

In addition, the similarity of the background colors between the basic shots and the candidate shots is taken as a standard. Shots having a similarity equal to a threshold value or more are determined to be anchor model candidate shots. A normalized histogram intersection method is a means of measuring the similarity.

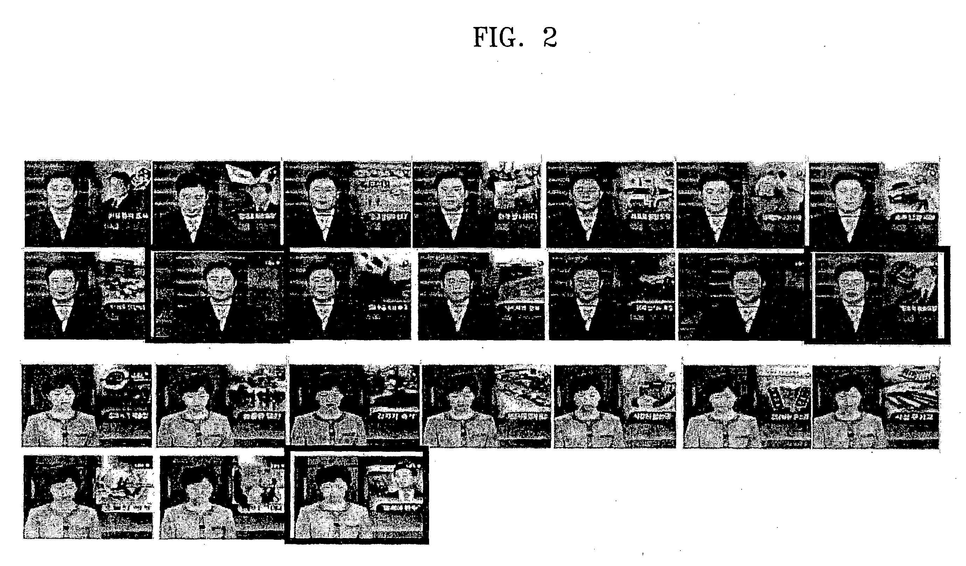

FIG. 2 shows a cluster of anchor model candidate shots used in a method to determine anchor shots according to an embodiment of the present invention. Shots satisfying the first standard are selected from the plurality of basic shots. Accordingly, the shots where appearances of male and female anchors are included are selected.

Secondly, the anchor model shot determining step is set forth.

The anchor model shots are selectively determined from the plurality of anchor model candidate shots selected through the above-mentioned method. For the determination of the anchor model shots, similar shots are clustered by collecting data on the colors of the face and upper-half body of an anchor.

After a rectangle including the facial area is removed from a first anchor model candidate shots, the skin color distribution of each of the YCbCr colors of the rectangle including the upper-half body area is analyzed for each shot. A male anchor typically wears suits and a female anchor typically wears single-colored clothes. Therefore, the color information of an anchor object, which is obtained from the above method, is reliable. The colors of the upper-half body of an anchor can be extracted by use of the color information on the anchor object. In order to create the upper-half body candidate rectangle, the facial area of the extracted anchor model candidate is enlarged to the right, left, bottom, and upper directions, respectively.

Then, the anchor upper-half body portion can be detected from the upper-half body area of the candidate rectangle by using the color information which is inspected in advance. Anchor objects can be obtained by performing an OR operation of the facial and upper-half body areas. The anchor objects constitute a histogram for each of the YCbCr colors. However, since the obtained anchor objects are not consistent in terms of size in news videos, the anchor objects are normalized to have values from 0 to 1 by dividing by the size of one of the anchor objects.

A histogram indicates relative weights of colors in a shot. The present embodiment obtains the histogram for a rectangle including the facial area rather than for the entire shot.

Equation 1 represents a histogram which is a standard of clustering.

[Equation 1]

$$Reference\_Object\_Histogram : O_{R_{i \in \{Y,Cb,Cr\}}}$$

Here, since "i" denotes the variable for the three colors Y, Cb, and Cr, Equation 1 means that the histogram is made for the three colors Y, Cb, and Cr. "O (Object)" is used as the denotation of a function in order to emphasize that the histogram is for a specific object rather than for the entire screen.

Like the histogram for the anchor object, a histogram for each of YCbCr colors is represented as Equation 2.

[Equation 2]

$$Candidate\_Object\_Histogram : O_{C_{i \in \{Y,Cb,Cr\}}}$$

Clustering is performed by measuring the amount of similarity between the standard histogram and the candidate histogram. The conventional normalized histogram intersection method is used for evaluating the similarity.

The similarity can be obtained by Equation 3.

[Equation 3]

$$H(O_R, O_C) = \sum_{i=1}^{n} \min(O_{R_i}, O_{C_i})$$

where "$O_R$" denotes a standard histogram, "$O_C$" denotes a candidate histogram, and "n" denotes the number of blocks. Since the anchor object colors of anchor shots are very similar, shots having an amount of similarity equal to a predetermined threshold value or more are considered as shots belonging to the same cluster.

When clustering is performed using the amount of similarity of colors, the shots can be divided into male anchor shots, female anchor shots, and report shot groups. To make a model of an anchor, it is preferable that an anchor model group is selected among a cluster having a number of shots.

Among the selected cluster, the anchor model is made using the information on the position of each anchor's face. The anchor's face is located at the left side, the center portion, or the right side of a screen. When the anchor's face is positioned on the left side of the screen, a news icon or title indicating the contents of the news is displayed on the right side of the screen. On the contrary, when the anchor's face is positioned on the right side of the screen, a news icon or title indicating the contents of the news is displayed on the left. Therefore, when the anchor appears on the left or the right side of the screen, the remaining portions, such as a news icon or title, are removed. When the anchor's face is positioned in the center of the screen, a news icon or title is not displayed on the screen.

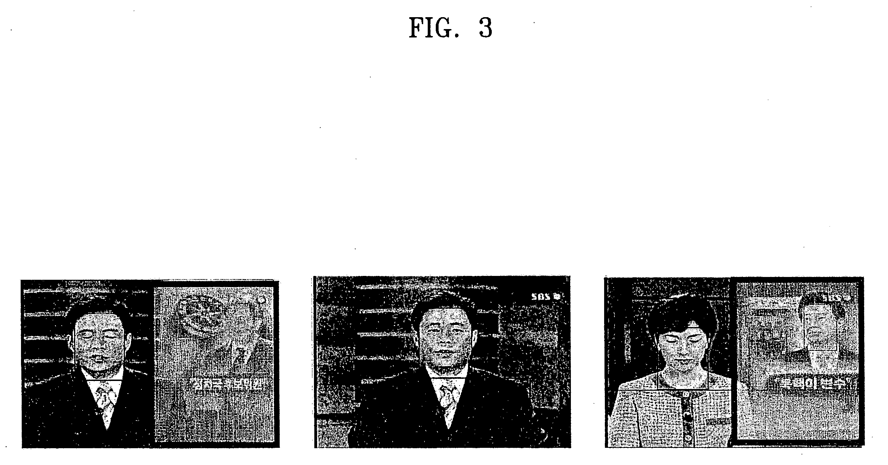

FIG. 3 shows anchor model shots used in a method to determine anchor shots according to an embodiment of the present invention.

Shots satisfying the second standard are selected among anchor model candidate shots shown in FIG.2. FIG. 3 shows three selected anchor model shots. In case of a male anchor, shots in which the male anchor appears on the left and the center of the screen are determined to be the anchor model shots. In case of a female anchor, a shot in which the female anchor appears only on the left is determined to be the anchor model shot. The anchor model shots are determined by a pool of the anchor model candidate shots shown in FIG. 2.

Thirdly, the anchor shot determining step is set forth.

The amount of similarity is measured between the created anchor models and the basic shots. Shots having the similarity of a predetermined value or more are determined to be anchor shots.

For a comparison of the similarity, a rectangle having the same position and size as the model is divided into a plurality of blocks, e.g., 24 blocks.

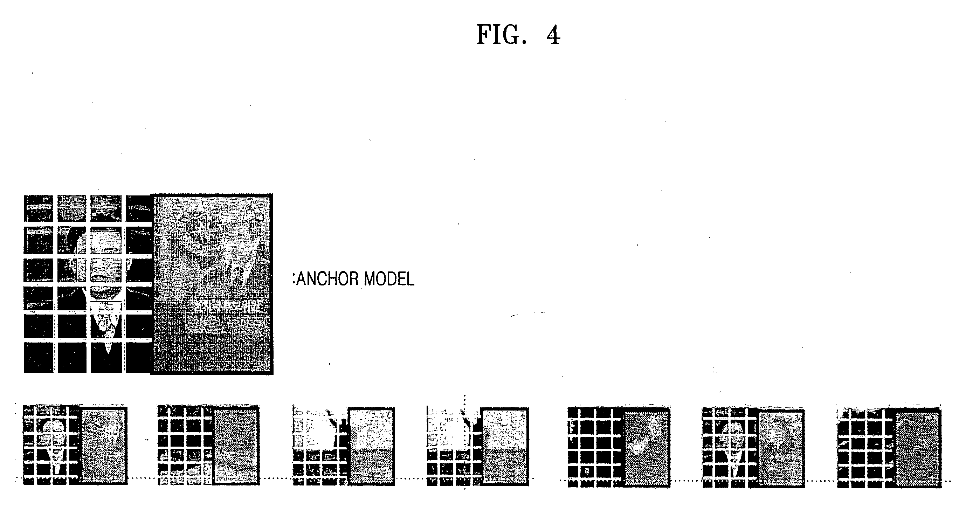

FIG. 4 is a diagram showing a method of dividing anchor model shots used in a method of determining anchor shots into blocks according to an embodiment of the present invention.

Anchor model shots divided into a plurality of blocks and basic shots are shown in FIG. 4. In the method of dividing the anchor model shots into blocks, a caption on the right of a screen is not considered when an anchor appears on the left side of the screen. In other words, only the anchor on the left side of the screen is divided into a plurality of blocks. The divided plurality of block data are considered as key data and compared with basic shots. Also in the basic shots compared, only the left side of the screen is considered.

The anchor is positioned in almost an identical position in the anchor shots of the news. However, considering that the camera and the anchor slightly move, the amount of similarity of the block that has the position information should be used as a standard in order to obtain a reliable result.

The mean value $B_K$ for a predetermined K block is represented as Equation 4.

$$[Equation\ 4]$$

$$B_K = \frac{\sum_{i=1}^{N} RGB_K(i)}{N}$$

Here, a symbol $RGB_K(i)$ denotes a corresponding value to color of the block K, and a symbol N denotes the number of pixels in a single block.

A difference "Differ" between the mean value $B_{KA}$ for the anchor model block K and the mean value $B_{KS}$ for the key frame block K is represented as Equation 5.

$$[Equation\ 5]$$

$$Differ = \sum_{K=1}^{G} \left| B_{KA} - B_{KS} \right|$$

Here, a symbol G denotes the number of the entire blocks included in a screen. When the difference is a predetermined threshold value or more, the shot is determined to be the anchor shot.

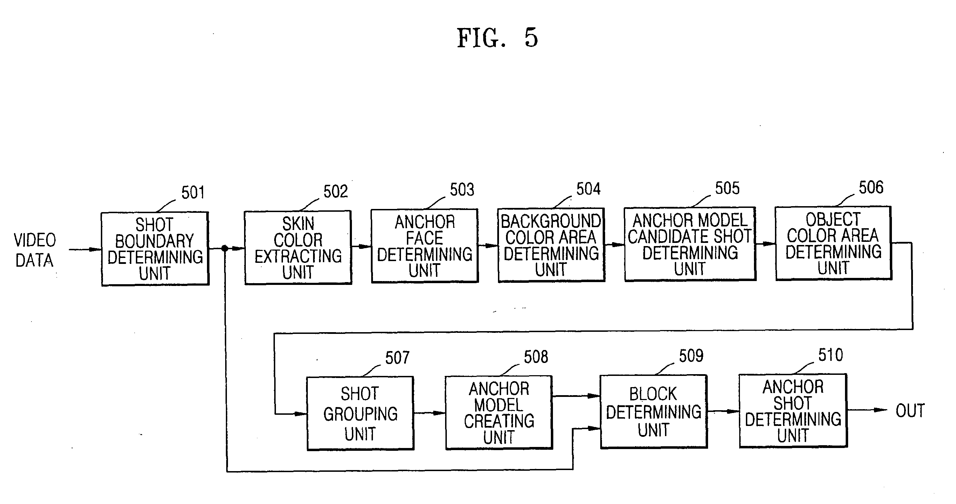

FIG. 5 is a block diagram showing an apparatus for determining anchor shots according to an embodiment of the present invention.

The apparatus for determining anchor shots comprises a shot boundary determining unit 501, a skin color extracting unit 502, an anchor face determining unit 503, a background color area determining unit 504, an anchor model candidate shot determining unit 505, an object color area determining unit 506, a shot grouping unit 507, an anchor model creating unit 508, a block determining unit 509, and an anchor shot determining unit 510.

The shot boundary determining unit 501 receives video data to determine boundaries which divides shots, and extracts predetermined shots from the video data on the basis of the determined boundaries.

The skin color extracting unit 502 extracts the color of the anchor's skin in the shots extracted from the shot boundary determining unit 501.

The anchor face determining unit 503 determines the anchor's face by using information on the skin color extracted from the skin color extracting unit 502.

The background color area determining unit 504 makes it possible to distinguish the anchor from the background by determining a color area for the background of the anchor determined in the anchor face determining unit 503.

The anchor model candidate shot determining unit 505 determines anchor model candidate shots among the shots extracted in the shot boundary determining unit 501 by using information on the anchor determined in the anchor face determining unit 503 and the background color determined in the background color area determining unit 504.

The object color area determining unit 506 determines the gender of the anchors, the number of anchors, and report shots by comparing similarity of colors of anchors among the shots determined in the anchor model candidate shot determining unit 505.

The shot grouping unit 507 groups together male anchor shots, female anchor shots, and report shots respectively by using the information determined in the object color area determining unit 506.

The anchor model creating unit 508 creates anchor models according to positions of anchors in the groups of the male and female anchor shots created in the shot grouping unit 507. In other words, the anchor model shots are created depending on whether anchors are located at the left side, the center portion, or the right side of a screen.

The block determining unit 509 defines only the facial area and upper-half body of an anchor as one small block among the anchor model shots created in the anchor model creating unit 508. The remaining area is excluded from the block.

The anchor shot determining unit 510 determines at least one anchor shot among the male anchor shots and at least one anchor shot among the female anchor shots created in the anchor model creating unit 508 by using the blocks determined in the block determining unit 509.

According to the present invention, the method of determining the anchor shots adaptively creates and utilizes the left side, the right side, and the center portion models of the anchor in news videos in order to detect anchor shots from various formats of news videos. In order to prevent the incorrect detection and increase the detection speed, the similarity is compared for the same position and size between the entire key frames and the created anchor models. In order to detect the shots for anchors appearing at least once, the key frames similar to anchor models are detected as the anchor shots.

According to the present invention, it can be understood from the detailed description that the method of detecting the anchor by using the model creation can be adapted not only to news videos but also to all video data, as typical video data, which should be provided with indexing and browsing functions.

For instance, videos for English conversation instruction include a plurality of dialogues according to typically established situations. In general, the plurality of dialogues develop after briefing of a master of ceremonies (MC) about the situations to be developed next. Therefore, the plurality of dialogues can be classified on the basis of the MC's appearance.

It can be easily understood that a figure corresponding to a news anchor is the MC of the video data for English conversation instruction. Therefore, it is understood that the present invention can be adapted to video data for English conversation instruction as well as news videos. It is understood that the anchor in the present invention means not only a news announcer but also any standard used for classifying video data.

While the present invention has been described with reference to exemplary embodiments thereof, it will be understood by those skilled in the art that various changes in form and details may be made therein without departing from the scope of the present invention as defined by the following claims.

According to the present invention, it is possible to provide a method of determining anchor shots and an apparatus therefor using the model creation capable of detecting anchor shots for various formats of videos by creating adaptive anchor models rather than by using a predetermined model, and improving its speed and performance by comparing the similarity of the created models and the entire key frames. Therefore, the present invention can be used in indexing, summarizing, and browsing based on a household AV device, an authoring tool for providing contents, and contents of news videos.

**Claims**

1. A method of determining anchor shots which can be used in indexing, summarizing, and browsing contents of video data, the method comprising:

    extracting a plurality of basic shots from the video data according to a predetermined standard;
    selecting a plurality of anchor model candidate shots from the plurality of basic shots by applying a first standard to the plurality of basic shots;
    determining at least one anchor model shot by applying a second standard to the plurality of anchor model candidate shots; and
    determining at least one anchor shot by comparing the amount of similarity of the anchor model shots and the plurality of basic shots.

2. The method of claim 1, wherein the predetermined standard is a moment when a screen halted for a predetermined time changes to another screen.

3. The method of claim 1 or 2, wherein the first standard is the amount of similarity of anchor face detection information, anchor face restriction condition, a shot length, and background color information.

4. The method of claim 3, wherein the anchor face restriction condition is the size and the position of the facial rectangle area, face color density, and the movement of the facial rectangle area.

5. The method of claim 3 or 4, wherein the background color information is obtained on the basis of a rectangle including the face.

6. The method of claim 5, wherein the background color information is a normalized and quantized color histogram which is obtained on the basis of a rectangle including the face.

7. The method of claim 5 or 6, wherein the rectangle depends on whether the facial area is located at the left side, the right side, or the center portion of a screen, and wherein the rectangle indicates a minimum area of the left side or the right side of a screen including the facial area and upper-half body when the facial area is located at the left side or the right side of the screen, and the rectangle indicates the entire area of the screen when the facial area and upper-half body is located in the center portion.

8. The method of claim 7, wherein the rectangle is divided into a plurality of blocks by grouping a plurality of pixels constituting the rectangle.

9. The method of any preceding claim, wherein the second standard is the position and color information of the facial area and upper-half body of an anchor on a screen, and wherein the number of the anchor model shots is determined according to the gender of an anchor and the position of the face and upper-half body of an anchor.

10. The method of any preceding claim, wherein the step of determining at least one anchor shot introduces a rectangle including the face and upper-half body of the anchor appearing on the anchor model shots and the plurality of basic shots, and groups together a plurality of pixels constituting the rectangle to divide the rectangle into a plurality of blocks; and compares the amounts of similarity of color information between the blocks constituting compared shots.

11. The method of claim 10, wherein the color information is a color histogram that normalizes and quantizes color information of the facial area and upper-half body.

12. The method of any preceding claim, wherein, in the determining of the anchor model shots, the anchor model shots are determined among a number of anchor model candidate shots.

13. The method of claim 12, wherein, in the determining of the anchor model shots, the number of the anchor model shots is determined according to the gender of an anchor and the position of the facial area and upper-half body of an anchor appearing on a screen among the anchor model candidate shots.

14. An apparatus for determining anchor shots which can be used in indexing, summarizing, and browsing contents of video data, the apparatus comprising:

a shot boundary determining unit receiving video data to determine boundaries dividing shots, and extracting predetermined shots from the video data on the basis of the determined boundaries;
a skin color extracting unit extracting the anchor's skin in the shots extracted from the shot boundary determining unit;
an anchor face determining unit determining the anchor's facial area using the information of the skin color extracted from the skin color extracting unit;
a background color area determining unit making it possible to distinguish the anchor from the background by determining a color area for the background of the anchor determined in the anchor face determining unit;
an anchor model candidate shot determining unit determining anchor model candidate shots among the shots extracted in the shot boundary determining unit by using information on the anchor determined in the anchor face determining unit and the background color determined in the background color area determining unit;
an object color area determining unit determining information on the genders of anchors, the number of anchors, and report shots by comparing the amounts of similarity of colors of the anchors among the shots determined in the anchor model candidate shot determining unit;
a shot grouping unit grouping together male anchor shots, female anchor shots, and report shots respectively by using the information determined in the object color area determining unit;
an anchor model creating unit creating anchor models according to positions of anchors in the groups of the male and female anchor shots created in the shot grouping unit;
a block determining unit defining only the facial area and upper-half body of an anchor as one small block among the anchor model shots created in the anchor model creating unit; and

an anchor shot determining unit determining at least one anchor shot among the male anchor shots and at least one anchor shot among the female anchor shots created in the anchor model creating unit by using the blocks determined in the block determining unit.

# FIG. 1

VIDEO DATA

```
BASIC SHOTS EXTRACTED          ─ 110

ANCHOR MODEL CANDIDATE         ─ 120
    SHOTS SELECTED

ANCHOR MODEL SHOTS             ─ 130
    DETERMINED

ANCHOR SHOTS DETERMINED        ─ 140
```

FIG. 2

FIG. 3

FIG. 4

ANCHOR MODEL

# FIG. 5

VIDEO
DATA →

SHOT
BOUNDARY
DETERMINING
UNIT — 501

SKIN
COLOR
EXTRACTING
UNIT — 502

ANCHOR
FACE
DETERMINING
UNIT — 503

BACKGROUND
COLOR AREA
DETERMINING
UNIT — 504

ANCHOR MODEL
CANDIDATE SHOT
DETERMINING
UNIT — 505

OBJECT
COLOR AREA
DETERMINING
UNIT — 506

SHOT
GROUPING
UNIT — 507

ANCHOR
MODEL
CREATING
UNIT — 508

BLOCK
DETERMINING
UNIT — 509

ANCHOR
SHOT
DETERMINING
UNIT — 510

→ OUT

**European Patent Office**

**EUROPEAN SEARCH REPORT**

Application Number

EP 04 25 7813

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HONGJIANG ZHANG ET AL: "Automatic parsing of news video" MULTIMEDIA COMPUTING AND SYSTEMS, 1994., PROCEEDINGS OF THE INTERNATIONAL CONFERENCE ON BOSTON, MA, USA 15-19 MAY 1994, LOS ALAMITOS, CA, USA,IEEE COMPUT. SOC, 15 May 1994 (1994-05-15), pages 45-54, XP010098205 ISBN: 0-8186-5530-5 * paragraph [2.1.] - paragraph [2.2.5.] * ----- | 1-14 | G11B27/28 G06F17/30 |
| D,X | US 2002/146168 A1 (LEE JI EUN ET AL) 10 October 2002 (2002-10-10) * abstract * * paragraph [0015] - paragraph [0018] * * paragraph [0036] - paragraph [0047] * ----- | 1-3,12, 14 | |
| D,A | GUNSEL B ET AL: "Video indexing through integration of syntactic and semantic features" APPLICATIONS OF COMPUTER VISION, 1996. WACV '96., PROCEEDINGS 3RD IEEE WORKSHOP ON SARASOTA, FL, USA 2-4 DEC. 1996, LOS ALAMITOS, CA, USA,IEEE COMPUT. SOC, US, 2 December 1996 (1996-12-02), pages 90-95, XP010206416 ISBN: 0-8186-7620-5 * figure 2 * ----- | 4-8 | |
| A | BERTINI M ET AL: "Content-based indexing and retrieval of TV news" April 2001 (2001-04), PATTERN RECOGNITION LETTERS, NORTH-HOLLAND PUBL. AMSTERDAM, NL, PAGE(S) 503-516 , XP004233002 ISSN: 0167-8655 * paragraph [003.] * ----- | 1-14 | |

**TECHNICAL FIELDS SEARCHED (Int.Cl.7)**

G11B
G06F

-/--

The present search report has been drawn up for all claims

| Place of search | Date of completion of the search | Examiner |
|---|---|---|
| The Hague | 12 May 2005 | Valencia, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

European Patent
Office

**EUROPEAN SEARCH REPORT**

Application Number

EP 04 25 7813

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | HANJALIC A ET AL:  "TEMPLATE-BASED DETECTION OF ANCHORPERSON SHOTS IN NEWS PROGRAMS" PROCEEDINGS. INTERNATIONAL CONFERENCE ON IMAGE PROCESSING, vol. 3, 1998, pages 148-152, XP001025572 * paragraph [3.2.] * ----- | 1,8,14 | |
| D,A | XINBO GAO ET AL:  "A graph-theoretical clustering based anchorperson shot detection for news video indexing" COMPUTATIONAL INTELLIGENCE AND MULTIMEDIA APPLICATIONS, 2003. ICCIMA 2003. PROCEEDINGS. FIFTH INTERNATIONAL CONFERENCE ON 27-30 SEPT. 2003, PISCATAWAY, NJ, USA,IEEE, 27 September 2003 (2003-09-27), pages 108-113, XP010661636 ISBN: 0-7695-1957-1 * paragraph [003.] * ----- | 1-14 | |
| P,D, A | NAKAJIMA ET AL:  "Automatic Anchorperson detection from an MPEG Coded TV Program" INTERNATIONAL CONFERENCE ON CONSUMER ELECTRONICS, [Online] - 20 June 2002 (2002-06-20) pages 122-123, XP002327984 Retrieved from the Internet: URL:http://ieeexplore.ieee.org/iel5/7922/2 1838/01013900.pdf?arnumber=1013900> [retrieved on 2005-05-12] * the whole document * ----- | 1-14 | TECHNICAL FIELDS SEARCHED (Int.Cl.7) |

The present search report has been drawn up for all claims

| Place of search | Date of completion of the search | Examiner |
|---|---|---|
| The Hague | 12 May 2005 | Valencia, E |

EPO FORM 1503 03.82 (P04C01)

## ANNEX TO THE EUROPEAN SEARCH REPORT
## ON EUROPEAN PATENT APPLICATION NO.

EP 04 25 7813

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2005

| Patent document cited in search report | Publication date | Patent family member(s) | Publication date |
|---|---|---|---|
| US 2002146168 A1 | 10-10-2002 | KR 2002075081 A<br>JP 2003032583 A | 04-10-2002<br>31-01-2003 |

EPO FORM P0459

For more details about this annex : see Official Journal of the European Patent Office, No. 12/82